# EUROPEAN PATENT SPECIFICATION

(11) **EP 4 618 121 B1**
(45) Date of publication and mention of the grant of the patent: **15.07.2026**
(21) Application number: 25159731.6
(22) Date of filing: 24.02.2025
(51) Int. Cl.: H01G 4/12, H01G 4/232, H01G 4/30, H01G 4/008, H01G 4/10, H01G 4/20, H01G 4/012

(54) **MULTI-LAYER CERAMIC CAPACITOR AND MANUFACTURING METHOD THEREOF**
KERAMISCHER MEHRSCHICHTKONDENSATOR UND VERFAHREN ZU SEINER HERSTELLUNG
CONDENSATEUR CÉRAMIQUE MULTICOUCHE ET SON PROCÉDÉ DE FABRICATION

(30) Priority: 15.03.2024 US 202418605891
(43) Date of publication of application: 17.09.2025
(73) Proprietor: Yageo Corporation, Kaohsiung City 811 (TW)
(72) Inventor: FUJIMOTO, Masayuki, 831 Kaohsiung City (TW); WU, Ming-Chun, 831 Kaohsiung City (TW)
(74) Representative: Ström & Gulliksson AB

(56) References cited:
- US-A1- 2023 084 921
- US-A1- 2023 207 211
- US-A1- 2023 290 576
- US-A1- 2023 298 820
- US-A1- 2023 307 181
- US-A1- 2024 112 861

## Description

### BACKGROUND

### Field of Invention

The present disclosure relates to a technology for manufacturing a capacitor, and more particularly, to a multi-layer ceramic capacitor (MLCC).

### Description of Related Art

Multi-layer ceramic capacitors are a kind of ceramic capacitors, and capacitance of which is mainly proportional to a surface area of the product and a number of stacked ceramic films. The multi-layer ceramic capacitors can be directly mounted by a surface mount technology (SMT), and the multi-layer ceramic capacitors are easy to be formed into chips and have small volumes, such that the multi-layer ceramic capacitors have become a mainstream product in the capacitor industry and are applied in various electronic devices.

Perovskite oxide compounds as materials for dielectric layers of the multi-layer ceramic capacitor can reduce the cost of the multi-layer ceramic capacitor and enhance the performance of the multi-layer ceramic capacitor, such that the perovskite oxide compounds have been widely used in the multi-layer ceramic capacitors. However, as the number of stacked internal electrode layers in the multi-layer ceramic capacitor increases, the thickness of the dielectric layers is decreased, such that the insulation resistance between the internal electrode layers is reduced, which decreases the reliability and high temperature load life of the multi-layer ceramic capacitor.

Furthermore, as the thickness of the dielectric layers is increased, the mean time to failure (MTTF) of the conventional multi-layer ceramic capacitors is reduced, thereby decreasing the lifetime of the multi-layer ceramic capacitors.

Therefore, there is a need for a capacitor manufacturing technology that can overcome the defects of the conventional multi-layer ceramic capacitors.

Reference is made to the following documents, which represent the relevant prior art in the field of multi-layer ceramic capacitors (MLCCs).

D1 (US 2023/290576 A1) discloses a multi-layer ceramic capacitor. This ceramic device comprises a multilayer chip (100) including dielectric layers (11) and internal electrode layers (12) alternately stacked. The dielectric layers (11) contain a ceramic material that includes perovskite oxides such as barium titanate. The internal electrode layers (12) comprise a main component metal, which typically includes nickel. D1 teaches the formation of a segregation layer (17) which contains a sub metal element (such as indium) different from the main component metal. This segregation layer (17) is present at an interface between the internal electrode layer (12) and the dielectric layer (11). The disclosed function of this interface segregation layer is to suppress leakage current by strengthening the Schottky barrier, thereby improving the lifetime of the multi-layer ceramic capacitor.

D2 (US 2023/2988820 A1) also discloses a ceramic electronic device (100) which includes dielectric layers (11) and internal electrode layers (12). The dielectric layers (11) include a plurality of crystal grains, and a sub-element (such as indium) is present in the dielectric layer. D2 teaches that a segregation portion in which the sub-element is segregated in shell portions and grain boundaries of the plurality of crystal grains is included in the dielectric layers (11). The objective of this segregation within the dielectric layer is to improve the reliability of the capacitor and increase the high temperature load life.

### SUMMARY

The inventors have recognized that combining the structures and functions disclosed separately in D1 (interface segregation) and D2 (grain boundary segregation) does not lead to a predictable result. Although both prior art documents aim to improve reliability, the present invention achieves a cooperative synergistic effect by requiring specific parameters and constraints that ensure the simultaneous generation and optimal functionality of both segregation structures, resulting in an unexpected improvement in Mean Time To Failure (MTTF) compared to simply applying the teachings of D1 and D2 alone,

Therefore, one objective of the present disclosure is to provide a multi-layer ceramic capacitor, in which each internal electrode layer includes a nickel inner layer and an indium segregation layer between the nickel inner layer and dielectric layers. The indium segregation layer can provide a Schottky barrier between the nickel inner layer and the dielectric layers, and the Schottky barrier can suppress leakage current. In addition, due to the addition of indium metal, a multi-layer ceramic brick can be sintered in a high reducing atmosphere, such that the multi-layer ceramic capacitor has stable reliability at higher operating temperatures, thereby increasing high temperature load life of the multi-layer ceramic capacitor and enhancing reliability of the multi-layer ceramic capacitor. Compared with the conventional multi-layer ceramic capacitor, the MTTF of the disclosed multi-layer ceramic capacitor is improved, thereby increasing the lifetime of the multi-layer ceramic capacitor.

According to the aforementioned objectives, the present disclosure provides a multi-layer ceramic capacitor. The multi-layer ceramic capacitor according to the invention is defined by the features of claim 1 and includes a multi-layer ceramic brick, a first terminal electrode, and a second terminal electrode. The multi-layer ceramic brick has a first end surface and a second end surface that are opposite to each other. The multi-layer ceramic brick includes a plurality of dielectric layers and a plurality of internal electrode layers. The dielectric layers include a plurality of perovskite oxides and borosilicate glass, and the perovskite oxides include barium and titanium. The internal electrode layers are alternately stacked with the dielectric layers. Each of the internal electrode layers includes an inner layer and a first indium segregation layer. A material of the inner layer includes nickel. The first indium segregation layer is located between the inner layer and one of the dielectric layers, in which a thickness of the first indium segregation layer ranges from 1 nm to 19 nm, the dielectric layers includes a plurality of second indium segregation layers respectively located at a plurality of grain boundaries of the perovskite oxides. The first terminal electrode is disposed on the first end surface and electrically connected to a portion of the internal electrode layers. The second terminal electrode is disposed on the second end surface and electrically connected to the other portion of the internal electrode layers.

Based on a total weight of the perovskite oxides as 100 wt.%, the borosilicate glass accounts for 0.01 wt.% to 5 wt.%. The internal electrode layers are formed by sintering a nickel paste added with indium, and the nickel paste added with 0.01 mol% to 5 mol% indium. The amount of borosilicate glass is basically proportional to the amount of indium.

According to one embodiment of the present disclosure, the borosilicate glass includes B₂O₃, Al₂O₃, and SiO₂.

According to one embodiment of the present disclosure, a first indium content of the first indium segregation layer is greater than a second indium content of each of the second indium segregation layers.

According to one embodiment of the present disclosure, based on a titanium content of the perovskite oxides and a second indium content of the second indium segregation layers as 100 mol%, the second indium content accounts for 10⁻²⁰ mol% to 10⁻² mol%.

According to one embodiment of the present disclosure, the first indium segregation layer includes indium, barium, and titanium.

According to one embodiment of the present disclosure, the second indium segregation layers include indium, barium, and titanium.

According to one embodiment of the present disclosure, a thickness of each of the internal electrode layers is 0.4 to 0.6 of a thickness of each of the dielectric layers.

According to the aforementioned objectives, the present disclosure further provides a manufacturing method for a multi-layer ceramic capacitor. The manufacturing method according to the invention is defined by the features of claim 8 and includes the following steps. A plurality of dielectric layers is formed, in which the dielectric layers include a plurality of perovskite oxides and borosilicate glass, and the perovskite oxides include barium and titanium. A plurality of internal electrode layers is formed. The internal electrode layers and the dielectric layers are alternately laminated to form a laminated stack. A sintering process is performed on the laminated stack to form a multi-layer ceramic brick. The sintering process includes the following steps: a low temperature burn-out step is performed and a high temperature sintering step is performed. A first terminal electrode and a second terminal electrode are respectively formed on two ends of the multi-layer ceramic brick to obtain the multi-layer ceramic capacitor.

Based on a total weight of the perovskite oxides as 100 wt.%, the borosilicate glass accounts for 0.01 wt.% to 5 wt.%. The internal electrode layers include a nickel paste added with indium, and the nickel paste added with 0.01 mol% to 5 mol% indium. The amount of borosilicate glass is basically proportional to the amount of indium. After the sintering process, a first indium segregation layer is formed at an interface between each of the internal electrode layers and each of the dielectric layers, and a plurality of second indium segregation layers is formed at a plurality of grain boundaries of perovskite oxides. The first indium segregation layer and the second indium segregation layers are generated simultaneously. According to one embodiment of the present disclosure, the borosilicate glass includes B₂O₃, Al₂O₃, and SiO₂.

### DETAILED DESCRIPTION

The embodiments of the present disclosure are discussed in detail below. However, it will be appreciated that the embodiments provide many applicable concepts that can be implemented in various specific contents. The embodiments discussed and disclosed are for illustrative purposes only and are not intended to limit the scope of the present disclosure.

In addition, the terms "first", "second", and the like, as used herein, are not intended to mean a sequence or order, and are merely used to distinguish elements or operations described in the same technical terms.

The spatial relationship between two elements described in the present disclosure applies not only to the orientation depicted in the drawings, but also to the orientations not represented by the drawings, such as the orientation of the inversion. Moreover, the terms "connected", "electrically connected", or the like between two components referred to in the present disclosure are not limited to the direct connection or electrical connection of the two components, and may also include indirect connection or electrical connection as required.

In the present disclosure, a MLCC with "metal" internal electrode layers is denoted as a "metal" MLCC, for example, a Ni MLCC or a Ni-In MLCC. Specifically, a "Ni MLCC" represents a MLCC with internal electrode layers including Ni. Similarly, a "Ni-In MLCC" represents a MLCC with internal electrode layers including Ni and In.

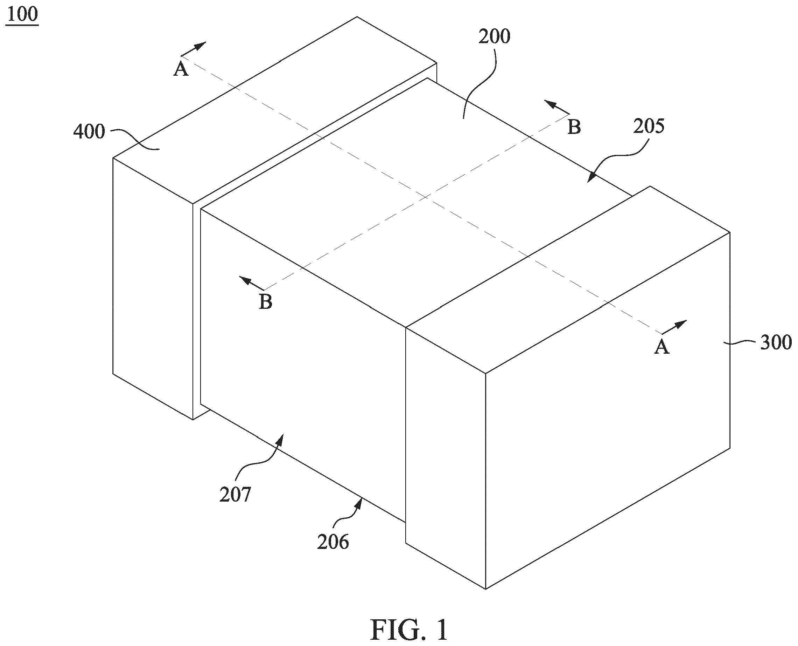

Referring to FIG. 1 to FIG. 3, FIG. 1 to FIG. 3 respectively illustrate a schematic three-dimensional view of a multi-layer ceramic capacitor 100 in accordance with an embodiment of the present disclosure, and schematic cross-sectional views of the multi-layer ceramic capacitor 100 taken along a section line A-A and a section line B-B in FIG. 1. The multi-layer ceramic capacitor 100 may mainly include a multi-layer ceramic brick 200, a first terminal electrode 300, and a second terminal electrode 400.

For example, the multi-layer ceramic brick 200 may be a cuboid or a cube. However, the shape of the multi-layer ceramic brick 200 can be designed according to product requirements, and the present disclosure is not limited thereto. The multi-layer ceramic brick 200 has a first end surface 202 and a second end surface 204 that are opposite to each other. In the example shown in FIG. 1 to FIG. 3, the multi-layer ceramic brick 200 is a cuboid, such that the multi-layer ceramic brick 200 further includes a first surface 205 and a second surface 206 that are opposite to each other, and a third surface207 and a fourth surface 208 that are opposite each other. The first end surface 202, the second end surface 204, the third surface 207, and the fourth surface 208 are all located between the first surface 205 and the second surface 206. The third surface 207 and the fourth surface 208 are located between the first end surface 202 and the second end surface 204.

The multi-layer ceramic brick 200 may mainly include a plurality of dielectric layers 210 and a plurality of internal electrode layers 220. The dielectric layers 210 and the internal electrode layers 220 are alternately stacked with each other. In the manufacturing of the multi-layer ceramic brick 200, green sheets of the dielectric layers 210 and slurry layers of the internal electrode layers 220 may be alternately stacked, and then the stacked structure may be sintered. The dielectric layers 210 are ceramic layers formed by sintering green sheets of perovskite oxide and borosilicate glass, such that each of the dielectric layer 210 includes many perovskite oxides and borosilicate glass. The perovskite oxides include barium and titanium. In some examples, the dielectric layers 210 made from barium titanate (BaTiO₃) of the perovskite oxides.

In some examples, the borosilicate glass includes B₂O₃, Al₂O₃, and SiO₂. In some examples, based on a total weight of the perovskite oxides as 100 wt. %, the borosilicate glass accounts for 0.01 wt.% to 5 wt.%, such as 0.05, 0.1, 0.2, 0.3, 0.4, 0.5, 0.6, 0.7, 0.8, 0.9, 1, 1.5, 2, 2.5, 3, 3.5, 4, or 4.5 wt.%. When the borosilicate glass is in the above-mentioned ranges, the MTTF of the multi-layer ceramic capacitor 100 can be improved, thereby increasing the lifetime of the multi-layer ceramic capacitor 100.

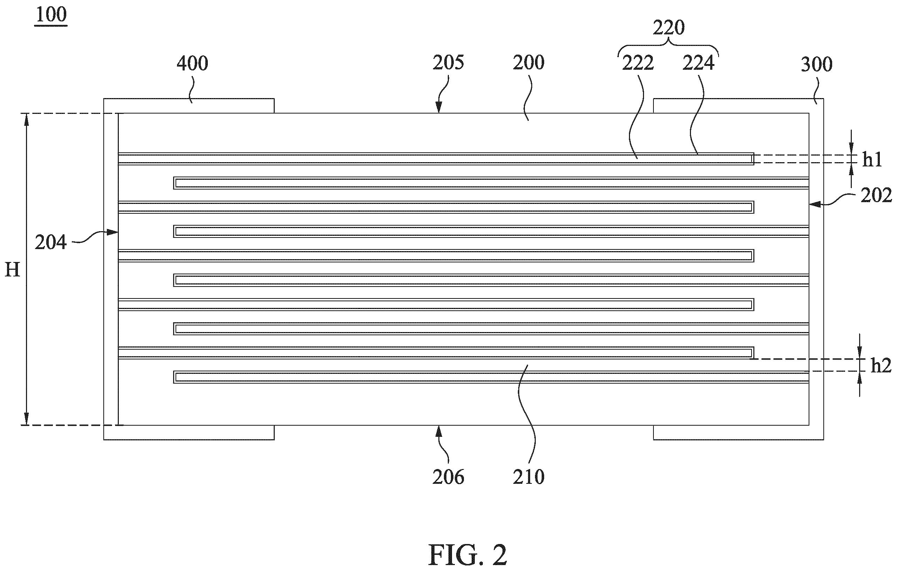

As shown in FIG. 2, the internal electrode layers 220 can be divided into two portions. One portion of the internal electrode layers 220 extend from the first end surface 202 of the multi-layer ceramic brick 200 toward the second end surface 204, and are spaced apart from the second end surface 204. The other portion of the internal electrode layers 220 extend from the second end surface 204 toward the first end surface 202, and are spaced apart from the first end surface 202. The two portions of the internal electrode layers 220 are alternately arranged, and the dielectric layers 210 are located between adjacent two of the internal electrode layers 220. The internal electrode layers 220 may be substantially parallel to the first surface 205 and the second surface 206 of the multi-layer ceramic brick 200.

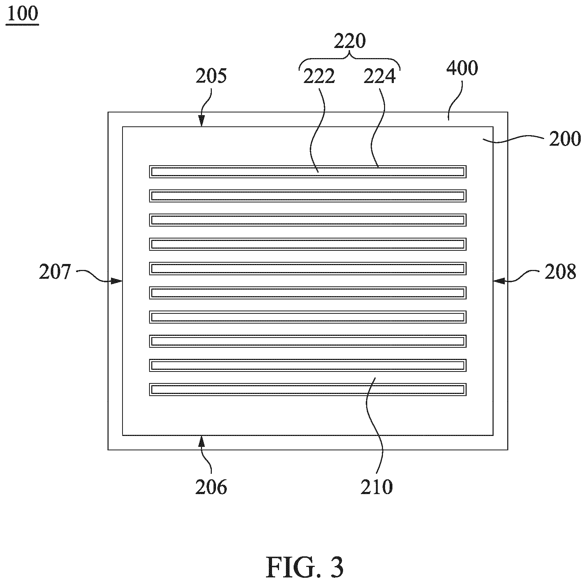

In the example shown in FIG. 2 and FIG. 3, each of the internal electrode layers 220 includes an inner layer 222 and a first indium segregation layer 224. A material of the inner layer 222 includes nickel. For example, nickel may be the major component of the inner layer 222. The first indium segregation layer 224 of each of the internal electrode layers 220 is located between the inner layer 222 and the dielectric layers 210 adjacent to the inner layer 222. Therefore, the first indium segregation layer 224 of each of the internal electrode layers 220 separates the inner layer 222 from the peripheral dielectric layers 210.

In some examples, a thickness of the first indium segregation layer 224 ranges from 1 nm to 100 nm, such as 3, 5, 8, 10, 12, 15, 18, 19, 20, 30, 40, 50, 60, 70, 80, or 90 nm. When the thickness of the first indium segregation layer 224 is in the above-mentioned ranges, the MTTF of the multi-layer ceramic capacitor 100 can be improved, thereby increasing the lifetime of the multi-layer ceramic capacitor 100. In some examples, referring to Fig. 2, a thickness h1 of each of the internal electrode layers is 0.4 to 0.6 of a thickness h2 of each of the dielectric layers. When the thickness ratio is in the above-mentioned ranges, the MTTF of the multi-layer ceramic capacitor 100 can be improved, thereby increasing the lifetime of the multi-layer ceramic capacitor 100. In some examples, referring to Fig. 2, a total thickness H of the dielectric layer 210 ranges from 0.5 µm to 8.4 µm, such as 1.2, 3.2, 5, or 6.8 µm.

In some examples, the internal electrode layers 220 are formed by sintering nickel paste added with indium. Therefore, the first indium segregation layer 224 may be an aggregated metallic phase layer of the indium metal between the inner layer 222 composed of nickel and the ceramic bodies of the dielectric layers 210. In the examples that the dielectric layers 210 are made from barium titanate, the first indium segregation layer 224 may include indium, barium, and titanium. In some exemplary examples, the nickel paste is added with 0.01 mol% to 5 mol% indium, such as 0.05, 0.1, 0.2, 0.3, 0.4, 0.5, 0.6, 0.7, 0.8, 0.9, 1, 1.5, 2, 2.5, 3, 3.5, 4, or 4.5 mol%. When the indium addition is in the above-mentioned ranges, the MTTF of the multi-layer ceramic capacitor 100 can be improved, thereby increasing the lifetime of the multi-layer ceramic capacitor 100.

Due to the addition of indium metal, the material of the internal electrode layers 220 can be sintered in a high reducing atmosphere. For example, the material of the internal electrode layers 220 may be sintered in an atmosphere with a high hydrogen content. As a result, the multi-layer ceramic capacitor 100 can have stable reliability at higher operating temperatures, such as 105°C and 125°C. In addition, the first indium segregation layer 224 can provide a Schottky barrier between the inner layer 222 and the dielectric layers 210, and the Schottky barrier can suppress the leakage current of the multi-layer ceramic capacitor 100. Therefore, the multi-layer ceramic capacitor 100 has a long load life at high temperatures and high reliability.

Referring to Fig. 1, the first terminal electrode 300 is at least disposed on the first end surface 202 of the multi-layer ceramic brick 200, and is electrically connected to the internal electrode layers 220 extending from the first end surface 202. The second terminal electrode 400 is at least disposed on the second end surface 204 of the multi-layer ceramic brick 200, and is electrically connected to the internal electrode layers 220 extending from the second end surface 204. In the example shown in FIG. 1 and FIG. 2, the first terminal electrode 300 covers the first end surface 202, and the first surface 205, the second surface 206, the third surface 207, and the fourth surface 208 that are adjacent to the first end surface 202. The second terminal electrode 400 covers the second end surface 204, and the first surface 205, the second surface 206, the third surface 207, and the fourth surface 208 that are adjacent to the second end surface 204.

Each of the first terminal electrode 300 and the second terminal electrode 400 may be a single-layer structure or a multi-layer structure. In some examples, each of the first terminal electrode 300 and the second terminal electrode 400 has a structure of three layers stacked sequentially, in which a material of the first layer may be copper, silver, or silver-palladium alloy, a material of the second layer may be nickel, and a material of the third layer may be tin. The multi-layer ceramic capacitors of the present disclosure can be used in autonomous electric vehicle technology, but is not limited thereto.

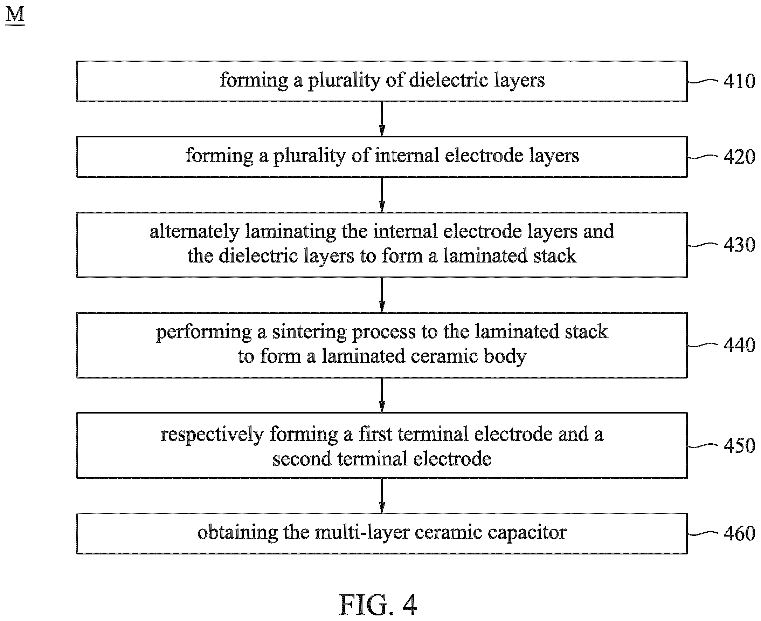

FIG. 4 is a flow chart of a manufacturing method M for the multi-layer ceramic capacitor 100 according to some embodiments of the present application. Referring to FIG. 2 and FIG. 4, a plurality of dielectric layers 210 is formed, as shown in a step 410 of the manufacturing method M. A plurality of internal electrode layers 220 is formed, as shown in a step 420 of the manufacturing method M. The internal electrode layers 220 and the dielectric layers 210 are alternately laminated to form a laminated stack, as shown in a step 430 of the manufacturing method M.

Next, still referring to FIG. 2 and FIG. 4, a sintering process is performed on the laminated stack to form the multi-layer ceramic brick 200, as shown in a step 440 of the manufacturing method M. The sintering process includes performing a low temperature burn-out step and a performing a high temperature sintering step. In one example, a temperature of the low temperature burn-out step is 300°C. In one example, a temperature of the high temperature sintering step is 1200°C.

Then, still referring to FIG. 2 and FIG. 4, the first terminal electrode 300 and the second terminal electrode 400 are respectively formed on two ends of the multi-layer ceramic brick 200 to obtain the multi-layer ceramic capacitor 100, as shown in a step 450 and a step 460 of the manufacturing method M.

The following Examples are used to describe the applications of the present disclosure, but they are not intended to limit the present disclosure. Those skilled in the art may make various changes and alterations herein without departing from the spirit and scope of the present disclosure.

### Experimental Example 1

In Experimental Example 1, BaTiO₃ perovskite powder was ball-milled with additives, such as 3 mol% of Dy₂O₃, 0.1 mol% of MgO, and 0.03 wt.% of borosilicate glass powder. After uniform mixing and drying, the raw material powder was milled with an organic solvent to obtain a raw material slurry. The slurry was cast on a plastic film and a green ceramic sheet was obtained after drying. Ni paste added with 0.05 wt.% of In₂O₃ powder was homogeneously mixed with the Ni paste using a three-roller mixer before printing on the green sheet as the inner layers. A plurality of Ni-printed sheets were stacked and cut to obtain a green Ni-In MLCC chip. After organic binder was burnout at 300 °C, the MLCC was fired at 1200 °C for 2 hours under an oxygen partial pressure of 1 × 10⁻¹³ Pa and then re-oxidized at a low temperature. In the reducing atmosphere during sintering process, In₂O₃ were converted into metallic In, resulting in the formation of Ni-In alloys. Finally, Cu terminal electrodes were formed by heating at 780 °C for 20 minutes.

Subsequently, a highly accelerated life test (HALT) was performed at 140 °C and 40 V (four times higher than the rated voltage). The leakage current degradation was evaluated using 20 pieces of each MLCC sample. The specific parameters and MTTF of Experimental Example 1 were shown in Table 1 below.

**Table 1**

| | Dielectric layer total thickness [µm] | Borosilicate glass powder addition [wt.%] | In₂O₃ addition [mol%] | MTTF [hour] |
|---|---|---|---|---|
| Experimental Example 1 | 1.2 | 0.03 | 0.05 | 12.2 |
| Experimental Example 2 | 1.2 | 0.1 | 0.05 | 23 |
| Experimental Example 3 | 3.2 | 0.52 | 0.13 | 45 |
| Experimental Example 4 | 5.0 | 0.8 | 0.2 | 93 |
| Experimental Example 5 | 6.8 | 1.12 | 0.28 | 122 |
| Experimental Example 6 | 8.4 | 1.4 | 0.35 | 198 |
| Experimental Example 7 | 1.2 | 0.01~5 | 0.01 | 1.6 |
| Experimental Example 8 | 1.2 | 0.01~5 | 0.1 | 6.7 |
| Experimental Example 9 | 1.2 | 0.01~5 | 1 | 12.5 |
| Experimental Example 10 | 1.2 | 0.01~5 | 5 | 3.9 |
| Experimental Example 11 | 1.2 | 0.01~5 | 0.01 | 10.6 |
| Experimental Example 12 | 1.2 | 0.01~5 | 0.1 | 22.4 |
| Experimental Example 13 | 1.2 | 0.01~5 | 1 | 5.6 |
| Experimental Example 14 | 1.2 | 0.01~5 | 5 | 2.8 |
| Comparative Example 1 | 1.2 | 0.01 | 0 | 1.2 |
| Comparative Example 2 | 1.2 | 0 | 5 | 0.8 |

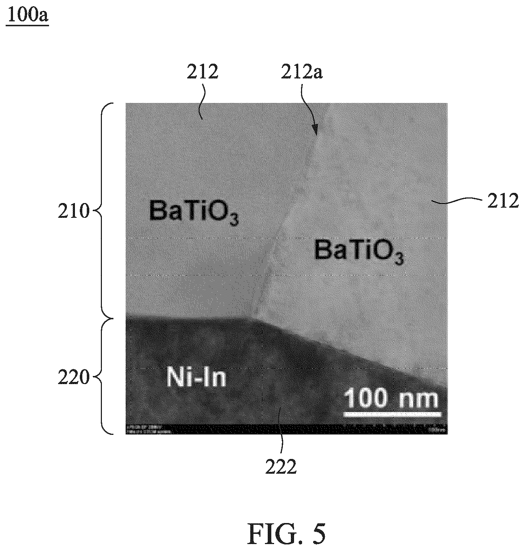

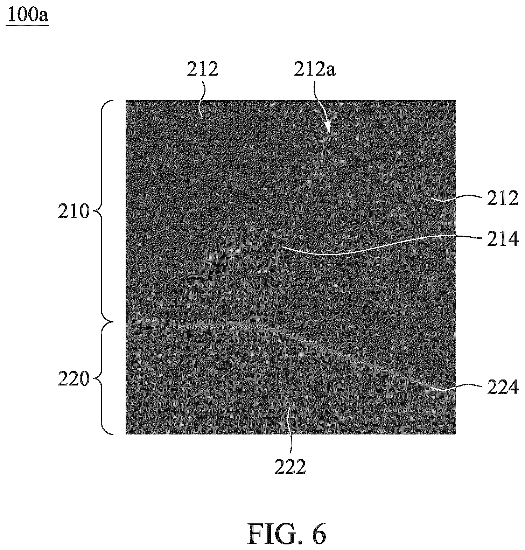

FIG. 5 was a scanning transmission electron microscope (STEM) annular dark field (ADF) image of a multi-layer ceramic capacitor 100a in Experimental Example 1. FIG. 6 was an In Lα energy dispersive X-ray mapping (EDX mapping) of FIG. 5. In Fig. 5 and Fig. 6, the internal electrode layers 220 were formed by sintering nickel paste added with indium. Therefore, the multi-layer ceramic capacitor 100a could be referred to as a Ni-In MLCC. A structure of the multi-layer ceramic capacitor 100a was substantially the same as that of the multi-layer ceramic capacitor 100. The difference between the multi-layer ceramic capacitors 100a and 100 was that, in addition to the first indium segregation layers 224 of the internal electrode layers 220, the dielectric layers 210 of the multi-layer ceramic capacitor 100a include a plurality of second indium segregation layers 214.

Specifically, as shown in FIG. 5 and FIG. 6, the dielectric layer 210 includes the plurality of perovskite oxides 212, and the second indium segregation layers 214 were respectively located at grain boundaries 212a of the perovskite oxides 212. That is, in the embodiment, the indium metal in the material of the internal electrode layer 220 not only segregated at the interface between the inner layer 222 and the dielectric layers 210 but also diffused into the dielectric layers 210 and segregated at the grain boundaries 212a of the perovskite oxides 212 of the dielectric layers 210.

Referring to FIG. 5 and FIG. 6, the grain (i.e., BaTiO₃) could be understood as a "core-shell structure," in which the core region of the grain was BaTiO₃ and the shell region of the grain was the grain boundaries 212a with indium metal (i.e., the second indium segregation layers 214) and the first indium segregation layers 224 with indium metal. In other words, indium metal segregates at the shell region of the core-shell structure. Specifically, diffused In (+3) occupied Ti (+4) site of the perovskite oxides 212 and worked as acceptor which could catch free electron generated by oxygen vacancy formation during sintering process under reducing atmosphere. Therefore, In segregation at the shell region of the core-shell structured BaTiO₃ grain including the grain boundaries increased the resistivity and reduced the leakage current to improve the MTTF of the multi-layer ceramic capacitor 100a.

Ni could form a liquid phase with the borosilicate glass at the interface between each of the internal electrode layers 220 and each of the dielectric layers 210 and then diffused into the shell region of the core-shell structured BaTiO3 grain. In some examples, the co-doping of the borosilicate glass proportionally increases with In addition into Ni paste. In some examples, the first indium segregation layer 224 and the second indium segregation layers 214 cooperatively work depending upon the total thickness of the dielectric layer 210.

In some examples, a first indium content of the first indium segregation layer 224 was greater than a second indium content of each of the second indium segregation layers 214. In some examples, based on a titanium content of the perovskite oxides 212 and a second indium content of the second indium segregation layers 214 as 100 mol%, the second indium content accounted for 10⁻²⁰ mol% to 10⁻² mol%. In some examples, the second indium segregation layers included indium, barium, and titanium.

In some examples, after the sintering process mentioned above, the first indium segregation layer 224 was formed at the interface between each of the internal electrode layers 220 and each of the dielectric layers 210, and the plurality of second indium segregation layers 214 were formed at the plurality of grain boundaries 212a of perovskite oxides 212, and wherein the first indium segregation layer 224 and the second indium segregation layers 214 were generated simultaneously.

Experimental Examples 2 to 6

The manufacturing method for the multi-layer ceramic capacitor of Experimental Example 1 was similar to those for the multi-layer ceramic capacitor of Experimental Examples 2 to 6. In Experimental Examples 2 to 6, the addition amount of In₂O₃ changed with the total thickness of the dielectric layer of the multi-layer ceramic capacitor. The addition amount of borosilicate glass powder was basically proportional to the In₂O₃ addition to promote In diffusion in the grain boundaries of the dielectric layers.

### Experimental Examples 7 to 14

The manufacturing method for the multi-layer ceramic capacitor of Experimental Example 1 was similar to those for the multi-layer ceramic capacitor of Experimental Examples 7 to 14. In Experimental Examples 7 to 14, the total thickness of the dielectric layer of the multi-layer ceramic capacitors were the same, and the addition amount of borosilicate glass powder ranged from 0.01 wt.% to 5 wt.%, but the In₂O₃ addition were different.

### Comparative Examples 1 to 2

The manufacturing method for the multi-layer ceramic capacitor of Experimental Example 1 was similar to those for the multi-layer ceramic capacitor of Comparative Examples 1 to 2. In Comparative Example 1, no In₂O₃ was added. In Comparative Example 2, no borosilicate glass powder was added.

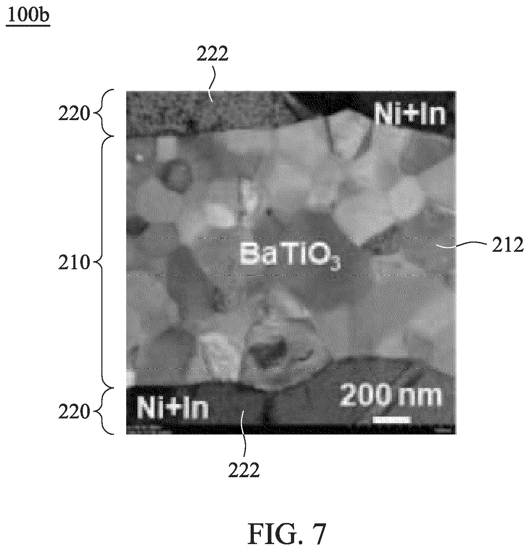

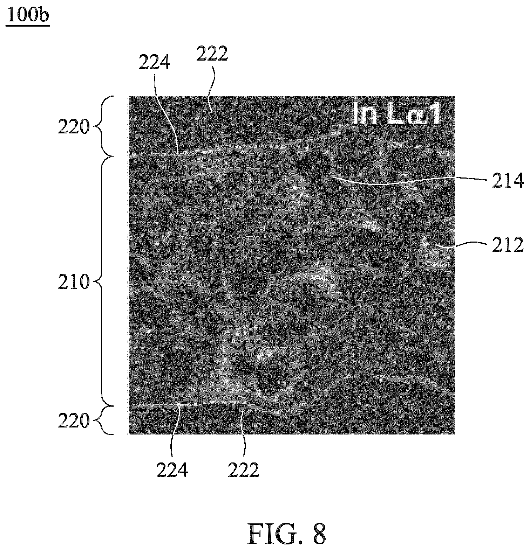

FIG. 7 was a STEM bright field image of a multi-layer ceramic capacitor 100b in Experimental Example 2. FIG. 8 was an In Lα EDX mapping of FIG. 7. In Fig. 7 and Fig. 8, the multi-layer ceramic capacitor 100b was a Ni-In MLCC. As shown in Fig. 8, In segregation (i.e., the first indium segregation layers 224 and the second indium segregation layers 214) at the interface between the inner layer 222 and the dielectric layers 210 and at the grain boundaries 212a of the perovskite oxides 212.

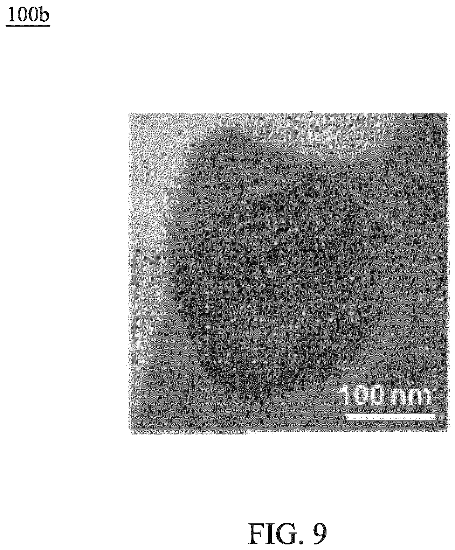

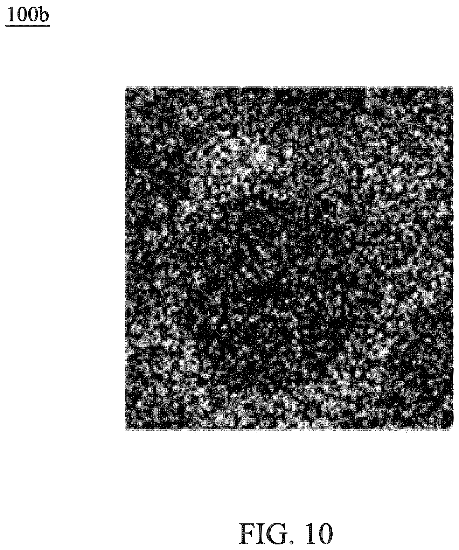

FIG. 9 was an enlargement view of the perovskite oxide (BaTiO₃) of Fig. 8. FIG. 10 was an In Lα EDX mapping of FIG. 9. As shown in FIG. 9, In diffused and segregated at the shell region of the core-shell structure. In occupies Ti site of BaTiO₃, and the acceptor function could be expanded to the core region of the dielectric layer caused by In segregation at the shell region including grain boundaries. The In segregation at the shell region was also effective under the increase of the dielectric layer thickness.

The results of Table 1 showed that, comparing with the MTTF of the multi-layer ceramic capacitors in Comparative Examples 1 to 2, the MLCCs added with specific contents of borosilicate glass powder and In₂O₃ had improved MTTF.

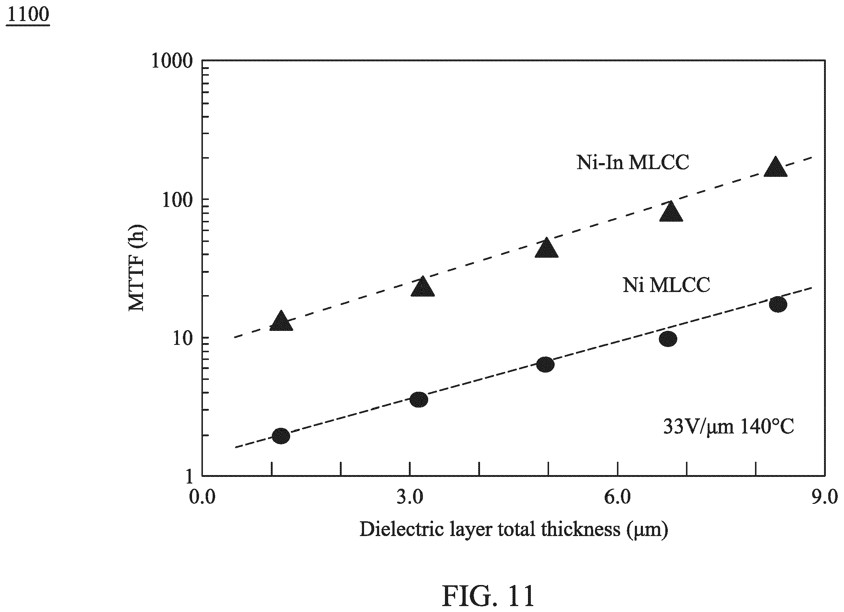

FIG. 11 was a diagram 1100 showing a relationship between the dielectric layer total thickness and MTTF in Ni-MLCC and Ni-In MLCC. As shown in FIG. 11, as the total thickness of the dielectric layers was increased, the MTTF of Ni-In MLCC was increased, thereby increasing the lifetime of the Ni-In MLCC. In addition, compared with Ni MLCC, Ni-In MLCC had better MTTF.

According to the aforementioned embodiments, it can be known that one advantage of the present disclosure is that the internal electrode layer of the multi-layer ceramic capacitor includes the nickel inner layer and the indium segregation layer between the nickel inner layer and dielectric layers. The indium segregation layer can provide a Schottky barrier between the nickel inner layer and the dielectric layers, and the Schottky barrier can suppress the leakage current. In addition, due to the addition of indium metal, the multi-layer ceramic brick can be sintered in a high reducing atmosphere, such that the multi-layer ceramic capacitor has stable reliability at higher operating temperatures, thereby increasing high temperature load life of the multi-layer ceramic capacitor and enhancing reliability of the multi-layer ceramic capacitor. Compared with the conventional multi-layer ceramic capacitor, the MTTF of the disclosed multi-layer ceramic capacitor is improved, thereby increasing the lifetime of the multi-layer ceramic capacitor.

## Claims

1. A multi-layer ceramic capacitor (100), comprising:
a multi-layer ceramic brick (200) having a first end surface (202) and a second end surface (204) that are opposite to each other, wherein the multi-layer ceramic brick (200) comprises:
a plurality of dielectric layers (210) comprising a plurality of perovskite oxides (212) and borosilicate glass, wherein the perovskite oxides (212) comprise barium and titanium; and
a plurality of internal electrode layers (220) alternately stacked with the dielectric layers (210), wherein each of the internal electrode layers (220) comprises:
an inner layer, wherein a material of the inner layer (222) comprises nickel; and
a first indium segregation layer (224) located between the inner layer (222) and one of the dielectric layers (210), wherein a thickness of the first indium segregation layer (224) ranges from 1 nm to 19 nm, the dielectric layers (210) comprises a plurality of second indium segregation layers (214) respectively located at a plurality of grain boundaries (212a) of the perovskite oxides (212);
a first terminal electrode (300) disposed on the first end surface (202) and electrically connected to a portion of the internal electrode layers (220); and
a second terminal electrode (400) disposed on the second end surface (204) and electrically connected to the other portion of the internal electrode layers (220),
wherein based on a total weight of the perovskite oxides (212) as 100 wt. %, the borosilicate glass accounts for 0.01 wt.% to 5 wt. %,
wherein the internal electrode layers (220) are formed by sintering a nickel paste added with indium, and the nickel paste added with 0.01 mol% to 5 mol% indium, and
wherein the amount of borosilicate glass is proportional to the amount of indium.

2. The multi-layer ceramic capacitor (100) of claim 1, wherein the borosilicate glass comprises B₂O₃, Al₂O₃, and SiO₂.

3. The multi-layer ceramic capacitor (100) of claim 1, wherein a first indium content of the first indium segregation layer (224) is greater than a second indium content of each of the second indium segregation layers (214).

4. The multi-layer ceramic capacitor (100) of claim 1, wherein based on a titanium content of the perovskite oxides (212) and a second indium content of the second indium segregation layers (214) as 100 mol%, the second indium content accounts for 10⁻²⁰ mol% to 10⁻² mol%.

5. The multi-layer ceramic capacitor (100) of claim 1, wherein the first indium segregation layer (224) comprises indium, barium, and titanium.

6. The multi-layer ceramic capacitor (100) of claim 1, wherein the second indium segregation layers (214) comprise indium, barium, and titanium.

7. The multi-layer ceramic capacitor (100) of claim 1, wherein a thickness of each of the internal electrode layers (220) is 0.4 to 0.6 of a thickness of each of the dielectric layers (210).

8. A manufacturing method for a multi-layer ceramic capacitor (100) according to any of claims 1 to 7, comprising
forming a plurality of dielectric layers (210) comprising a plurality of perovskite oxides (212) and borosilicate glass, wherein the perovskite oxides (212) comprise barium and titanium;
forming a plurality of internal electrode layers (220);
alternately laminating the internal electrode layers (220) and the dielectric layers (210) to form a laminated stack;
performing a sintering process on the laminated stack to form a multi-layer ceramic brick (200), wherein the sintering process comprises:
performing a low temperature burn-out step; and
performing a high temperature sintering step, and
respectively forming a first terminal electrode (300) and a second terminal electrode (400) on two ends of the multi-layer ceramic brick (200) to obtain the multi-layer ceramic capacitor (100),
wherein based on a total weight of the perovskite oxides (212) as 100 wt. %, the borosilicate glass accounts for 0.01 wt.% to 5 wt. %,
wherein the internal electrode layers (220) comprise a nickel paste added with indium, and the nickel paste added with 0.01 mol% to 5 mol% indium,
wherein the amount of borosilicate glass is proportional to the amount of indium,
wherein after the sintering process, a first indium segregation layer (224) is formed at an interface between each of the internal electrode layers (220) and each of the dielectric layers (210), and a plurality of second indium segregation layers (214) are formed at a plurality of grain boundaries (212a) of perovskite oxides (212), and
wherein the first indium segregation layer (224) and the second indium segregation layers (214) are generated simultaneously.

9. The manufacturing method for a multi-layer ceramic capacitor (100) of claim 8, wherein the borosilicate glass comprises B₂O₃, Al₂O₃, and SiO₂.

## Patentansprüche

1. Mehrschicht-Keramikkondensator (100), aufweisend:
einen mehrschichtigen Keramikkörper (200) mit einer ersten Endfläche (202) und einer zweiten Endfläche (204), die einander gegenüberliegen, wobei der mehrschichtige Keramikkörper (200) aufweist:
eine Vielzahl von dielektrischen Schichten (210), die eine Vielzahl von Perowskitoxiden (212) und Borosilikatglas aufweisen, wobei die Perowskitoxide (212) Barium und Titan aufweisen; und
eine Vielzahl von interne Elektrodenschichten (220), die abwechselnd mit den dielektrischen Schichten (210) gestapelt sind, wobei jede der internen Elektrodenschichten (220) aufweist:
eine innere Schicht, wobei ein Material der inneren Schicht (222) Nickel aufweist; und
eine erste Indium-Segregationsschicht (224), die zwischen der inneren Schicht (222) und einer der dielektrischen Schichten (210) angeordnet ist, wobei eine Dicke der ersten Indium-Segregationsschicht (224) im Bereich von 1 nm bis 19 nm liegt, wobei die dielektrischen Schichten (210) eine Vielzahl von zweiten Indium-Segregationsschichten (214) aufweisen, die jeweils an einer Vielzahl von Korngrenzen (212a) der Perowskitoxide (212) angeordnet sind;
eine erste Anschlusselektrode (300), die auf der ersten Endfläche (202) angeordnet und elektrisch mit einem Teil der interne Elektrodenschichten (220) verbunden ist; und
eine zweite Anschlusselektrode (400), die auf der zweiten Endfläche (204) angeordnet und elektrisch mit dem anderen Teil der interne Elektrodenschichten (220) verbunden ist, wobei bezogen auf ein Gesamtgewicht der Perowskitoxide (212) von 100 Gew.-% das Borosilikatglas 0,01 Gew.-% bis 5 Gew.-% ausmacht,
wobei die internen Elektrodenschichten (220) durch Sintern einer mit Indium versetzten Nickelpaste gebildet sind, und die Nickelpaste mit 0,01 mol% bis 5 mol% Indium versetzt ist, und
wobei die Menge des Borosilikatglases proportional zu der Menge an Indium ist.

2. Mehrschicht-Keramikkondensator (100) nach Anspruch 1, wobei das Borosilikatglas B₂O₃, Al₂O₃ und SiO₂ aufweist.

3. Mehrschicht-Keramikkondensator (100) nach Anspruch 1, wobei ein erster Indiumgehalt der ersten Indium-Segregationsschicht (224) größer ist als ein zweiter Indiumgehalt jeder der zweiten Indium-Segregationsschichten (214).

4. Mehrschicht-Keramikkondensator (100) nach Anspruch 1, wobei bezogen auf einen Titangehalt der Perowskitoxide (212) und einen zweiten Indiumgehalt der zweiten Indium-Segregationsschichten (214) von 100 mol% der zweite Indiumgehalt 10⁻²⁰ mol% bis 10⁻² mol% ausmacht.

5. Mehrschicht-Keramikkondensator (100) nach Anspruch 1, wobei die erste Indium-Segregationsschicht (224) Indium, Barium und Titan aufweist.

6. Mehrschicht-Keramikkondensator (100) nach Anspruch 1, wobei die zweiten Indium-Segregationsschichten (214) Indium, Barium und Titan aufweisen.

7. Mehrschicht-Keramikkondensator (100) nach Anspruch 1, wobei eine Dicke jeder der internen Elektrodenschichten (220) 0,4 bis 0,6 einer Dicke jeder der dielektrischen Schichten (210) beträgt.

8. Verfahren zur Herstellung eines Mehrschicht-Keramikkondensators (100) nach einem der Ansprüche 1 bis 7, aufweisend:
Bilden einer Vielzahl von dielektrischen Schichten (210), die eine Vielzahl von Perowskitoxiden (212) und Borosilikatglas aufweisen, wobei die Perowskitoxide (212) Barium und Titan aufweisen;
Bilden einer Vielzahl von interne Elektrodenschichten(220);
abwechselndes Laminieren der interne Elektrodenschichten (220) und der dielektrischen Schichten (210), um einen Laminatstapel zu bilden;
Durchführen eines Sinterprozesses an dem Laminatstapel, um einen mehrschichtigen Keramikkörper (200) zu bilden, wobei der Sinterprozess aufweist:
Durchführen eines Niedertemperatur-Ausbrennschritts; und
Durchführen eines Hochtemperatur-Sinterungsschritts, und
jeweiliges Bilden einer ersten Anschlusselektrode (300) und einer zweiten Anschlusselektrode (400) an zwei Enden des mehrschichtigen Keramikkörpers (200), um den Mehrschicht-Keramikkondensator (100) zu erhalten,
wobei bezogen auf ein Gesamtgewicht der Perowskitoxide (212) von 100 Gew.-% das Borosilikatglas 0,01 Gew.-% bis 5 Gew.-% ausmacht,
wobei die internen Elektrodenschichten (220) eine mit Indium versetzte Nickelpaste aufweisen, und die Nickelpaste mit 0,01 mol% bis 5 mol% Indium versetzt ist,
wobei die Menge des Borosilikatglases proportional zu der Menge an Indium ist,
wobei nach dem Sinterprozess eine erste Indium-Segregationsschicht (224) an einer Grenzfläche zwischen jeder der internen Elektrodenschichten (220) und jeder der dielektrischen Schichten (210) gebildet wird, und eine Vielzahl von zweiten Indium-Segregationsschichten (214) an einer Vielzahl von Korngrenzen (212a) von Perowskitoxiden (212) gebildet werden, und
wobei die erste Indium-Segregationsschicht (224) und die zweiten Indium-Segregationsschichten (214) gleichzeitig erzeugt werden.

9. Verfahren zur Herstellung eines Mehrschicht-Keramikkondensators (100) nach Anspruch 8, wobei das Borosilikatglas B₂O₃, Al₂O₃ und SiO₂ aufweist.

## Revendications

1. Condensateur céramique multi-couche (100), comprenant :
une brique céramique multi-couche (200) ayant une première surface d'extrémité (202) et une seconde surface d'extrémité (204) qui sont opposées l'une à l'autre, dans lequel la brique céramique multi-couche (200) comprend :
une pluralité de couches diélectriques (210) comprenant une pluralité d'oxydes de pérovskite (212) et du verre borosilicaté, dans lequel les oxydes de pérovskite (212) comprennent du baryum et du titane ; et
une pluralité de couches d'électrode internes (220) empilées de manière alternée avec les couches diélectriques (210), dans lequel chacune des couches d'électrode internes (220) comprend :
une couche interne, dans lequel un matériau de la couche interne (222) comprend du nickel ; et
une première couche de ségrégation d'indium (224) située entre la couche interne (222) et l'une des couches diélectriques (210), dans lequel une épaisseur de la première couche de ségrégation d'indium (224) est dans une plage de 1 nm à 19 nm, les couches diélectriques (210) comprennent une pluralité de secondes couches de ségrégation d'indium (214) situées respectivement au niveau d'une pluralité de joints de grain (212a) des oxydes de pérovskite (212) ;
une première électrode terminale (300) disposée sur la première surface d'extrémité (202) et connectée électriquement à une partie des couches d'électrode internes (220) ; et
une seconde électrode terminale (400) disposée sur la seconde surface d'extrémité (204) et connectée électriquement à l'autre partie des couches d'électrode internes (220),
dans lequel, sur la base d'un poids total des oxydes de pérovskite (212) en tant que 100 % en poids, le verre borosilicaté représente 0,01 % en poids à 5 % en poids,
dans lequel les couches d'électrode internes (220) sont formées par frittage d'une pâte de nickel additionnée d'indium, et de la pâte de nickel étant additionnée de 0,01 % en mole à 5 % en mole d'indium, et
dans lequel la quantité de verre borosilicaté est proportionnelle à la quantité d'indium.

2. Condensateur céramique multi-couche (100) selon la revendication 1, dans lequel le verre borosilicaté comprend B₂O₃, AI₂O₃ et SiO₂.

3. Condensateur céramique multi-couche (100) selon la revendication 1, dans lequel une première teneur en indium de la première couche de ségrégation d'indium (224) est supérieure à une seconde teneur en indium de chacune des secondes couches de ségrégation d'indium (214).

4. Condensateur céramique multi-couche (100) selon la revendication 1, dans lequel sur la base d'une teneur en titane des oxydes de pérovskite (212) et d'une seconde teneur en indium des secondes couches de ségrégation d'indium (214) en tant que 100 % en mole, la seconde teneur en indium représente 10⁻²⁰ % en mole à 10⁻² % en mole.

5. Condensateur céramique multi-couche (100) selon la revendication 1, dans lequel la première couche de ségrégation d'indium (224) comprend de l'indium, du baryum et du titane.

6. Condensateur céramique multi-couche (100) selon la revendication 1, dans lequel les secondes couches de ségrégation d'indium (214) comprennent de l'indium, du baryum et du titane.

7. Condensateur céramique multi-couche (100) selon la revendication 1, dans lequel une épaisseur de chacune des couches d'électrode internes (220) est de 0,4 à 0,6 d'une épaisseur de chacune des couches diélectriques (210).

8. Procédé de fabrication d'un condensateur céramique multi-couche (100) selon l'une quelconque des revendications 1 à 7, comprenant :
la formation d'une pluralité de couches diélectriques (210) comprenant une pluralité d'oxydes de pérovskite (212) et du verre borosilicaté, dans lequel les oxydes de pérovskite (212) comprennent du baryum et du titane ;
la formation d'une pluralité de couches d'électrode internes (220) ;
la stratification alternée des couches d'électrode internes (220) et des couches diélectriques (210) pour former un empilement stratifié ;
la réalisation d'un processus de frittage sur l'empilement stratifié pour former une brique céramique multi-couche (200), dans lequel le processus de frittage comprend :
la réalisation d'une étape de brûlage à basse température ; et
la réalisation d'une étape de frittage à haute température, et
la formation respective d'une première électrode terminale (300) et d'une seconde électrode terminale (400) sur deux extrémités de la brique céramique multi-couche (200) pour obtenir le condensateur céramique multi-couche (100),
dans lequel, sur la base d'un poids total des oxydes de pérovskite (212) en tant que 100 % en poids, le verre borosilicaté représente 0,01 % en poids à 5 % en poids,
dans lequel les couches d'électrode internes (220) comprennent une pâte de nickel additionnée d'indium, et la pâte de nickel étant additionnée de 0,01 % en mole à 5 % en mole d'indium,
dans lequel la quantité de verre borosilicaté est proportionnelle à la quantité d'indium,
dans lequel, après le processus de frittage, une première couche de ségrégation d'indium (224) est formée au niveau d'une interface entre chacune des couches d'électrode internes (220) et chacune des couches diélectriques (210), et une pluralité de secondes couches de ségrégation d'indium (214) sont formées au niveau d'une pluralité de joints de grain (212a) d'oxydes de pérovskite (212), et
dans lequel la première couche de ségrégation d'indium (224) et les secondes couches de ségrégation d'indium (214) sont générées simultanément.

9. Procédé de fabrication d'un condensateur céramique multi-couche (100) selon la revendication 8, dans lequel le verre borosilicaté comprend B₂O₃, AI₂O₃ et SiO₂.
